Europäisches Patentamt

(19) European Patent Office

Office européen des brevets

(11) Publication number: **0 002 348**
**B1**

# EUROPEAN PATENT SPECIFICATION

(45) Date of publication of patent specification: **08.12.82**

(51) Int. Cl.³: **C 08 L 23/32**, C 08 J 3/20, C 08 K 5/01

(21) Application number: **78300678.6**

(22) Date of filing: **28.11.78**

(54) **Process for the formation of elastomeric blends of a sulfonated elastomeric polymer.**

(30) Priority: **29.11.77 US 855726**
**29.11.77 US 855774**

(43) Date of publication of application:
**13.06.79 Bulletin 79/12**

(45) Publication of the grant of the patent:
**08.12.82 Bulletin 82/49**

(84) Designated Contracting States:
**BE DE FR GB NL**

(56) References cited:
**US - A - 3 373 132**
**US - A - 3 642 728**
**US - A - 3 847 854**
**US - A - 3 974 240**

(73) Proprietor: **Exxon Research and Engineering Company**
**P.O.Box 390 180 Park Avenue**
**Florham Park New Jersey 07932 (US)**

(72) Inventor: **Bock, Jan**
**500 Juniper Lane**
**Bridgewater New Jersey (US)**
Inventor: **Lundberg, Robert Dean**
**4 Brian Drive**
**Bridgewater New Jersey (US)**
Inventor: **Makowski, Henry Stanislaus**
**2045 Winding Brook Way**
**Scotch Plains New Jersey (US)**
Inventor: **Brenner, Douglas**
**61 East Sherbrooke Parkway**
**Livingston New Jersey (US)**

(74) Representative: **Field, Roger Norton et al,**
**ESSO Engineering (Europe) Ltd. Patents & Licences Apex Tower High Street**
**New Malden Surrey KT3 4DJ (GB)**

Courier Press, Leamington Spa, England.

Process for the formation of elastomeric blends of a sulphonated elastomeric polymer


This present invention relates to an improved solution process for the incorporation of a process oil into a neutralized sulphonated EPDM terpolymer thereby resulting in blend compositions of the sulphonated EPDM terpolymer and process oil which have unique physical and rheological properties.

It is already known to incorporate process oil into neutralized sulphonated elastomeric polymers, for example as described in US Patent Specifications 3974240 and 3847854. We have now devised a new method of making blends containing EPDM and process oil in which in contrast to Example 4 of US 3847854 no filler is present, and in which in contrast to US 3974240 the sulphonated EPDM is quenched with a quenching agent which may be a liquid aliphatic alcohol.

According to this invention a sulphonated EPDM terpolymer blend having no filler is made by a process comprising:

(a) dissolving an EPDM terpolymer in a solvent to form a cement;

(b) sulfonating with a sulphonating agent (as hereinafter defined) at a temperature between −10°C to 100°C, said EPDM terpolymer in said cement to form a sulphonated EPDM terpolymer;

(c) quenching with a quenching agent (as hereinafter defined) said cement of said sulphonated EPDM terpolymer to form a solution of said sulphonated EPDM terpolymer;

(d) at least partly neutralizing said sulphonated EPDM terpolymer in said solution with a neutralizing agent to form a neutralized sulphonated EPDM terpolymer;

(e) adding under agitation a non-polar process oil having less than 2 wt.% polar compounds to said solution of said neutralized sulphonated EPDM terpolymer to form a blend of said process oil and said neutralized sulphonated EPDM terpolymer in said solution; and

(f) recovering said sulphonated EPDM blend from said solution.

The term "EPDM" is used in the sense of its definition as found in ASTM D-1418-64 (American Society for Testing and Materials) and means a terpolymer containing ethylene and propylene in the backbone and a diene in the side chain. Illustrative methods for producing these terpolymers are found in US. Patent 3,280,082, British Patent 1,030,289 and French Patent 1,386,600, which are incorporated herein by reference. The preferred terpolymers contain 45 to 75 wt. % ethylene and 2 to 10 wt. % of a diene monomer, the balance of the polymer being propylene. More preferably, the polymer contains 50 to 70 wt. % ethylene, e.g., 50 wt. %, and 2.6 to 9.0 wt. % diene monomer, e.g., 5.0 wt. %. In general it is preferred that the EPDM has 0.1 to 10 mole % olefinic unsaturation. The diene monomer is preferably a non-conjugated diene. The $\bar{M}n$ of the terpolymer is preferably 10,000 to 200,000; more preferably 15,000 to 100,000; and most preferably 20,000 to 60,000. The Mooney viscosity (ML, 1+8, 100°C) of the terpolymer is preferably 5 to 90, more preferably 10 to 50 and most preferably 15 to 40, e.g., 20. The $\bar{M}v$ of the EPDM is preferably below 350,000, and more preferably below 300,000, e.g., 270,000. The $\bar{M}w$ of the EPDM is preferably below 500,000, and more preferably below 350,000, e.g., 343,000.

Illustrative of these non-conjugated diene monomers which may be used in the EPDM terpolymer are 1,4-hexadiene, dicyclopentadiene, 5-ethylidene-2-norbornene, 5-methylene-2-norbornene, 5-propenyl-2-norbornene and methyl tetrahydroindene. A typical EPDM is Vistalon 2504 (Exxon Chemical Co.), a terpolymer having a Mooney viscosity (ML, 1+8, 100°C) of 40 and having 50 wt. % of ethylene, 45 wt. % of propylene and 5.0 wt. % of 5-ethylidene-2-norbornene with an $\bar{M}n$ of 47,000, an $\bar{M}v$ of 145,000 and an $\bar{M}w$ of 174,000. ("Vistalon is a Registered Trade Mark at least in the United Kingdom). The Vistalon 2504 can be reprocessed through an extruder to produce a material having a Mooney viscosity of 20.

Vistalon 3708 (Exxon Chemical Co.) is a terpolymer having a Mooney viscosity (ML, 1+8, 127°C.) of 45—55 and having 65 wt. % of ethylene, 33 wt. % of propylene and 3.7 wt. % 5-ethylidene-2-norbornene with an $\bar{M}n$ of 53,000, an $\bar{M}w$ of 343,000 and an $\bar{M}v$ of 270,000.

Vistalon 6505 (Exxon Chemical Co.) is a terpolymer having a Mooney viscosity (ML, 1+8, 127°C.) of 45—55 and having 53 wt. % of ethylene, 9.0 wt. % of 5-ethylidene-2-norbornene and 38 wt. % of propylene.

Nordel 1320 (duPont) is another EPDM terpolymer having a Mooney viscosity (ML, 1+8, 100°C) of 25 and having 53 wt. % of ethylene, 3.5 wt. % of 1,4-hexadiene and 43.5 wt. % of propylene. ('Nordel' is a Registered Trade Mark at least in the United Kingdom).

In carrying out the present invention, an olefinically unsaturated polymer is sulfonated with a sulfonating agent which is defined as an acyl sulfate, a mixture of sulfuric acid and an acid anhydride, a sulfur trioxide donor complexed with a Lewis base containing oxygen, nitrogen or phosphorus or a mixture of said acyl sulfate and complex.

The term "sulfur trioxide donor" as used in the specification means a compound containing available sulfur trioxide. Illustrative of such sulfur trioxide donors are $SO_3$, chlorosulfonic acid, fluorosulfonic acid, sulfuric acid, oleum, etc. The term "complexing agent" as used in the specification means a Lewis base suitable for use in the practice of this invention, wherein a Lewis base is an electron pair donor. Typical Lewis bases are: dioxane, tetrahydrofuran, tetrahydrothiophene or triethyl phosphate.

The molar ratio of $SO_3$ donor to complexing agent may be as high as 15:1; preferably less than 9:1, more preferably 4:1 to 1:1, e.g., 2:1.

The preferred solvents for preparation of the complexes of sulfur trioxide donor with complexing agents are chlorinated hydrocarbons. Illustrative of such chlorinated solvents are carbon tetrachloride, dichloroethane, chloroform, and methylene chloride. The complexes may also be prepared by direct addition of reagents if precautions are taken to dissipate evolved heat.

The reactions of ethereal complexes of $SO_3$ with the unsaturation of polymer chains has been found to be non-quantitative generally because they are consumed through side reactions with impurities such as water. Therefore, the use of excess complex is desirable to give the required amount of sulfonation.

Other suitable sulfonating agents are the acyl sulfates, which are selected from acetyl, propionyl, butyryl or benzoyl sulfate, in particular acetyl sulfate. The acyl sulfate may be produced by reacting concentrated sulfuric acid with an acid anhydride or an acid halide in the presence or the absence of a solvent. For example, acetic anhydride may be reacted with sulfuric acid to form acetyl sulfate which may be used to sulfonate the polymers. If desired, acetic anhydride may be added to a solution of the polymer in a suitable solvent and sulfuric acid subsequently added to form acetyl sulfate *in situ*. Alternatively, acetyl sulfate may be performed by reaction of sulfur trioxide with acetic acid in a nonreactive solvent.

In the practice of this invention, the polymer to be sulfonated is dissolved in a suitable solvent and reacted with the sulfonating agent. The solvent medium must be a neutral one for the rubber and the sulfonating agent. The solvent is preferably an aromatic hydrocarbon, an aliphatic hydrocarbon, a cycloaliphatic hydrocarbon, a halogenated aromatic hydrocarbon or mixture thereof. Illustrations of these solvents are: isopentane, pentane, cyclohexane, isohexane, hexane, heptane and homologues thereof, benzene, toluene, chlorobenzene or xylene. The preferred solvent is an aliphatic hydrocarbon.

Sulfonation of the polymer is conducted at a temperature between $-10°C$ and $+100°C$. Sulfonation occurs when the sulfonating agent is added to the polymer solution. The sulfonating agent is dissolved in a suitable solvent, or may be added directly without solvent. With acetyl sulfate reagent it is most preferred to add acetic anhydride to the polymer cement and then sulfuric acid to prepare the acetyl sulfate reagent *in situ*. Reaction time may be 1 to 60 minutes, more preferably 5 to 45 and most preferably 15 to 30, wherein the product remains soluble throughout the reaction period. The acid form of the sulfonated elastomer is quenched with a quenching agent which is water, a liquid aliphatic alcohol such as methanol, ethanol or isopropanol, an aromatic hydroxyl compound such as phenol or a cycloaliphatic alcohol such as cyclohexanol.

The amount of desirable sulfonation depends on the particular application. Preferably, the elastomeric polymer is sulfonated at 10 to 60 meq. $SO_3H$/100 g of polymer, more preferably at 15 to 50 meq. $SO_3H$/100 g of polymer and most preferably at 20 to 40 meq. $SO_3H$/100 g of polymer. The sulfonic acid content can be determined by either titration of the polymeric sulfonic acid or Dietert Sulfur analysis. In the titration of the sulfonic acid the polymer is dissolved in solvent consisting of 95 parts by volume of toluene and 5 parts by volume of methanol at a concentration level of 50 grams per liter of solvent. The acid form is titrated with ethanolic sodium hydroxide to an Alizarin Thymolphthalein endpoint.

Polymers containing unsaturation and sulfonic acid groups have been found to be somewhat deficient in thermostability. Therefore, it is essential to neutralize at least a portion of the sulfonic acid as part of the manufacturing of sulfonated elastomeric polymer. Neutralization further improves the physical properties of the sulfonated polymer.

In preparing the ionomer, it is not necessary to neutralize every sulfonic acid group. Preferably, at least 75% of the sulfonic acid groups are neutralized, though 100% of the acids may be neutralized if desired; more preferably 90 to 100% of the sulfonic acid groups are neutralized; most preferably 95 to 100% are neutralized.

The neutralizing agents used in the process of the present invention may be basic salts of carboxylic acids, wherein the cation of the basic salt is a metal of Groups IA, IIA, IB or IIB of the Periodic Table of Elements, ammonium, aluminum, lead, iron or antimony or a mixture thereof. The Periodic Table which applies in this specification and claims is that adopted by the I.U.P.A.C. (1965 revision). Also, ammonia, an amine or salt thereof may be used.

Suitable monovalent metal ions are Na, K, Li, Cs, Ag, Hg, and Cu. Suitable divalent metal ions are Be, Mg, Ca, Sr, Ba, Cu, Cd, Hg, Pb, Fe, Hg and Zn.

The carboxylate ion of the metallic salt is derived from the following carboxylic acids as illustrated in the present invention; however, other carboxylic acids of the same generic class can be readily employed and are considered within the spirit and scope of the present embodiment. These carboxylic acids are: acetic, benzoic, lauric, palmitic, myristic, decanoic, octanoic and stearic.

Neutralization can also be effected with metallic oxides wherein the metallic ion is lead or a metal of Groups IIA or IIB of the Periodic Table of Elements or a mixture thereof. Illustrative examples are MgO, CaO, BaO, ZnO, $PbO_2$ or $Pb_3O_4$ and mixtures thereof.

Other neutralizing agents are basic salts of hydroxides or alkoxides, wherein the cation is ammonium or a metal of Groups IA or IIA of the Periodic Table of Elements of a mixture thereof. Useful examples of hydroxides are $NH_4OH$, $NaOH$, $KOH$, $LiOH$, $Mg(OH)_2$ and $Ba(OH)_2$.

To the neutralized sulfonated terpolymer in solution may be added a preferential plasticizer which may be a carboxylic acid or the ammonium or metal salts of these carboxylic acids, wherein the metal cation of the salt of the carboxylic acids is lead, iron, antimony, aluminum or a metal of Groups IA, IIA, IB or IIB of the Periodic Table of Elements thereof. The preferential plasticizer preferably incorporated into the neutralized sulfonated EPDM terpolymer at up to 45 parts, more preferably up to 35, and most preferably at up to 25 parts by weight per 100 parts by weight of sulphonated EPDM.

(Alternative preferential plasticizers may be organic esters, alcohols, phosphates, amines, amides or ureas and mixtures thereof). The preferred plasticizers are selected from long chain saturated aliphatic carboxylic acids such as stearic acid or the corresponding metallic salts and mixtures thereof.

The oils employed in the present invention are non-polar backbone process oils having less than 2 wt. % polar compounds as measured by molecular type clay gel analysis, preferably less than 0.75 wt. %, and more preferably less than 0.5 wt. %. These oils may be paraffinics ASTM Type 104B as defined in ASTM D-2226-70, aromatics ASTM Type 102 or naphthenics ASTM Type 104A wherein the oil has a flash point by the Cleveland open cup of at least 177°C, a pour point of less than 4.4°C, a viscosity of about 70 to about 3000 s.s.u.'s and a number average molecular weight of 300 to 1000, more preferably 300 to 750. Also mixtures of said non-polar process oils may be used. The preferred process oils are paraffinics. Table I illustrates typical oils encompassed by the scope of this invention. The preferred process oil is a paraffinic type having an $\overline{M}n$ of at least 300. Improved compression sets are obtained when oils having less than 20 wt. % aromatic constituents are used, more preferably less than 15 wt. % and most preferably less than 10 wt. %.

The process oil is preferably incorporated into the elastomeric product at less than 200, more preferably at 10 to 150, and most preferably at 25 to 125 parts by weight per 100 parts by weight of the neutralized sulfonated elastomeric polymer.

TABLE I

| Type oil | Oil code No. | Viscosity sus | Mn | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | — | 1.3 | 70.3 | 28.4 |
| Naphthenic | Flexon 765 | 505 | — | 0.9 | 20.8 | 78.3 |
| Naphthenic | Sunthene 4240 | 2206 | — | 1.1 | 43.9 | 55.0 |

'Flexon' is a Registered Trade Mark at least in the United Kingdom.

The improved solution process for the formation of these sulfonated elastomeric blend compositions of a process oil and the neutralized sulfonated elastomeric polymer comprises dissolving an elastomeric polymer in a solvent to form a cement. The polymer in the cement is sulfonated with a sulfonating agent to form an acid form of a sulfonated elastomeric polymer. The cement of the acid form of the sulfonated elastomeric polymer is quenched with one of the above-mentioned quenching agents, e.g. an aliphatic alcohol, to form a solution of the acid form of the sulfonated elastomeric polymer. The acid form of the sulfonated elastomeric polymer in solution is neutralized with a neutralizing agent to form the neutralized sulfonated elastomeric polymer in solution. A process oil is added under agitation to the solution of the neutralized sulfonated elastomeric polymer to form an elastomeric blend of the process oil and the neutralized sulfonated elastomeric polymer in solution. The elastomeric blend is recovered from the solution by steam stripping or other suitable recovery techniques.

The advantages of the improved process of manufacture of these improved elastomeric blends may be more readily appreciated by reference to the following examples.

Example 1
Preparation of oil extended sulfonated EPDM
One hundred grams of an EPDM terpolymer (Vistalon 2504—20) was dissolved in 1000 ml of n-hexane at 40°C. The EPDM had approximately 50% ethylene, 45% propylene and 5% 5-ethylidene-2-norbornene and a Mooney viscosity (ML, 1+8, 100°C) of 20. After the cement was cooled to room temperature, 5.74 ml of acetic anhydride (60.75 mmoles) was added. While stirring the mixture, 2.1 ml of 95% $H_2SO_4$ (37.5 mmoles) was added dropwise. The sulfonated reaction was quenched after 30 minutes with 150 ml of isopropanol. The acid form of the sulfonated polymer was analyzed by Dietert Sulfur Analysis to have 33 meq. of $SO_3H$ groups per 100 grams of polymer. A solution of 9.86 grams (90 meq./100 g EPDM) of zinc acetate dihydrate dissolved in 25 ml of distilled water was then added in

4

# 0 002 348

the cement and the cement stirred for an additional 30 minutes. Antioxidant 2246 (0.5 grams) was then added to the cement. The sulfonated neutralized polymer in cement will be designated (A).

A paraffinic process oil, Sunpar 2280, was next added at a level of 50 grams (50 phr) to the cement. The resulting oil extended neutralized sulfonated EPDM terpolymer (B) was then isolated by steam stripping and forced air drying. Composition (B) was found to be a free flowing polymer crumb.

The precursor EPDM terpolymer (Vistalon 2504-20) will be designated as (C). To (C) was added 50 phr of Sunpar 2280 on a two roll rubber mill. The resulting composition (D) was extremely soft and tacky and required scraping from the mill. Both compositions C and D were observed to cold flow on a table top under their own weight within minutes.

Compositions A and B were placed in 55 gal (248 litres) drums and examined one month later. Surprisingly, the material at the bottom of the drums exhibited no cold flow behavior and was essentially identical to that at the top. Pre-oil extension of the sulfonated elastomer had not altered its excellent cold flow characteristics.

Example 2

A neutralized sulfonated EPDM terpolymer cement was prepared according to composition (A) in Example 1. To the cement was added stearic acid under agitation at a level of 90 meq/100 g of EPDM. The cement was then divided into three aliquots into which were added 0, 25, and 75 grams/100 grams of EPDM of a paraffinic process oil — Sunpar 2280. The resulting compositions were isolated by steam stripping and drying.

The dried compositions were compression molded at 177°C for 5 minutes. Tensile stress-strain measurements were performed on micro-tensile specimens cut from the molded pads. The measurements were made at an elevated temperature, 70°C, in order to examine the expected reduction in physical properties due to oil extension. To complement the tensile data, thermal mechanical analysis (TMA) was performed on the molded pads to investigate the softening behavior due to oil extension. The results of both measurements are shown in Table II.

## TABLE II
### Effect of oil extension on physical properties

| Sample | Stress/strain at 700°C | | | | Softening points, TMA | |
|---|---|---|---|---|---|---|
| (g/Oil/ 100 g EPDM) | 100% modulus psi | (kPa×10⁻²) | Tensile strength, psi | (kPa×10⁻²) | $T_1$ | $T_2$ |
| No oil | 84 | 5.9 | 100 | 7.0 | 44 | 105 |
| 25 pts. oil | 58 | 4.0 | 75 | 5.2 | 42 | 103 |
| 75 pts. oil | 27 | 1.9 | 28 | 2.0 | 37 | 92 |

It is readily apparent from the data above that at these oil levels, the softening points are sufficiently high and that the oil extended gums have considerable resistance to deformation at 70°C and thus have excellent cold flow characteristics. It is observed that there are two inflection points in the TMA curves above room temperature. It is surprisingly observed that both inflection points are not appreciably affected by the incorporation of considerable oil content (75 phr). However, the tensile stress strain behavior indicates that an upper limit of approximately 100 phr of oil for this particular neutralized and plasticized sulfonated EPDM terpolymer is practical. Above this level of oil extension the physical properties would be sufficiently reduced to minimize the excellent properties of oil extended compositions. Thus a practical upper limit has been established and this example has illustrated that below this upper limit the oil extended plasticized and neutralized EPDM terpolymers exhibit surprisingly good tensile properties.

Example 3

Compression set of a sulphonated EPDM compound containing process oils having various polar concentrations

The compounds described in Example 2 was blended with eight different process oils listed in Table III. The concentration of oil was 60 parts by weight per 100 parts by weight of sulphonated EPDM. Compression set measurements were made on each of these eight samples as follows.

Test disks were made from each of the samples by compression molding a 0.06 inch (1.5 mm) thick pad at 350°C. One-half inch (12.7 mm) diameter discs were cut from the pads and plied 4-high to form a test sample which was about 0.24 inches (6 mm) high. These tests were made at room temperature under controlled dry conditions. The test used was the standard ASTM D-395 — Method B, which involves 25% compression of the samples for 22 hrs, followed by 30 minutes recovery after the compressive force is removed.

5

## 0 002 348

Results for the compounds containing the various oils are given in Table IV. By comparing the results of this table, with the chemical properties of the various oils which are listed in Table III, it is seen that only the oils with concentrations of polar compounds below 0.4 wt. % give the lowest compression set values for these materials of 20% or less. The oils with higher content of polar compounds give significantly higher compression set values of from 24 to 33. For example, even the best of the oils which have a polar content of over 0.4, the Sunpar 180 oil, has a compression set of 24 which is a fractional increase of over 40% above that of the low polar content Tufflo 6026. ('Tufflo' is a Registered Trade Mark at least in the United Kingdom). Such an increase in compression set is likely to limit the applications for the material since compression set is such a crucial property in many applications. of course, those oils with higher polar contents of above 0.75% have even higher compression set values and will be even more limited in their applications. Various specific applications for articles such as gaskets, and hoses have stringent compression set requirements, such that each increase in compression set for an elastomer will prevent utilization of that elastomer for a certain range of specific applications. Thus, a difference in compression set of 5% can make the difference between utilization or non-utilization of a particular elastomer in a specific application. Therefore, the use of low polar content processing oils will maximize the range of compression-set sensitive applications for which a sulfonated EPDM elastomer can be used.

It is of interest to consider the other chemical properties which are typically given for process oils; these are listed in Table III. Aniline point is generally considered a measure of solvency power, with a low Aniline Point being associated with high solvency. It is conceivable that this high solvency could result in partial solvation of the physical cross-links of the sulfonated EPDM by the oil, thereby increasing compression set. However, surprisingly, the listed Aniline Point data indicate no correlation between Aniline Point and compression set of the sulfonated EPDM compositions. For example, the lowest Aniline Point oil listed is Sunpar 2280 and the highest is Flexon 340, yet these two oils have very close compression set values. The naphthenic or paraffinic nature of the oil, given in columns 6 and 7 of Table III also seem to have little direct effect on compression set. For example, the compression set of the paraffinic oil Tufflo 6026 is not much different from that of the naphthenic oil Tufflo 6014, whereas the two paraffinic oils Tufflo 6026 and Sunpar 2280 have widely different compression set values. Aromatics content does not appear to have an effect on compression set above about 20 wt. % of aromatic constituents since Flexon 340 and Sunpar 2280 have greatly different aromatic content, and yet they both yield compositions having high compression set values. Those oils which give the better compression set values have the lower aromatic contents of less than 20 wt. % and the best compression set values were obtained with oils having aromatic contents of less than 10 wt. %. In summary, the wt. percent polar compounds in the oil differentiates between oils which give improved compression set behavior and oils which give less desirable compression set behavior. Therefore, process oils having polar contents no higher than 0.75 wt. %, and preferably no higher than 0.4 wt. %, and aromatic constituents of less than about 20 wt. %, more preferably less than 15 wt. %, are desirable in the many applications of sulfonated EPDM for which compression set is of crucial importance.

6

## TABLE III
### Chemical properties of various processing oils

| Oil designation | Clay/silica gel analysis (wt. %) | | | Carbon type analysis (wt. %) | | | Aniline Point | |
|---|---|---|---|---|---|---|---|---|
| | Polar compounds | Aromatic | Saturates | Aromatic carbon atoms | Naphthenic carbon atoms | Paraffinic carbon atoms | (°F) | (°C) |
| Tufflo[1] 6026 | 0 | 0 | 100 | 0 | 31 | 69 | 233 | 112 |
| Tufflo[1] 6014 | 0 | 0.1 | 99.9 | 0 | 57 | 43 | 191 | 88 |
| Sunpar[2] 2280 | 1.5 | 22.0 | 76.5 | 4 | 25 | 71 | 262 | 128 |
| Sunpar[2] 180 | 0.7 | 17.0 | 82.3 | 4 | 26 | 70 | 244 | 118 |
| Flexon[3] 790 | 7.3 | 28.2 | 64.5 | 9 | 32 | 59 | 242 | 117 |
| Flexon[3] 340 | 1.3 | 70.3 | 28.4 | 31 | 41 | 28 | 95 | 35 |
| ECA[4] 6492 | 0 | 0 | — | — | — | — | — | — |
| Shellflex[5] 371 | 0.3 | 15 | 84 | 1 | 46 | 53 | 214 | 101 |

[1]Arco Chemical Co.
[2]Sun Oil Co.
[3]Exxon Chemical Co.
[4]Exxon Chemical Co., this is an olefinic oil having an average carbon chain length of 24.
[5]Shell Chemical Co. ('Shellflex' is a Registered Trade Mark at least in the United Kingdom).

0 002 348

TABLE IV
Compression set of a sulfonated EPDM compound[1]
containing process oils having various polar concentrations

| Process oil[3] | Compression set[2] (%) |
|---|---|
| Tufflo 6026 | 17 |
| Tufflo 6014 | 19 |
| Sunpar 2280 | 33 |
| Shellflex 371 | 20 |
| ECA 6492 | 18 |
| Flexon 790* | 29 |
| Flexon 340 | 32 |
| Sunpar 180 | 24 |

*Not in accordance with the invention (Flexon 790 contains 7.3% polar compounds).
[1]The compound is described in Example 2.
[2]Test ASTM D-395, Method B, at room temperature (25°C), 22 hours under 25% compression, with 30 min recovery time.
[3]Manufacturers and chemical properties are listed in Table III.

Example 4
Melt flow and tensile properties of a sulfonated EPDM compound containing process oils having different polar concentrations

In Example 3 it was demonstrated that the use of low polar content process oils resulted in improved compression set for the compounds. In this example, three of the compounds of Example 3 are compared in their melt flow rates (processability) at 190°C and in their room temperature and 70°C tensile properties. The compounds in this example employ the oils Sunpar 2280, Shellflex 371, and ECA 6492 (see Table III for their specifications and manufacturers). Test pads were made from these samples by compression molding at 177°C. The procedure was to preheat the empty mold plates in the press for a few minutes, then the material was put in the mold and the mold containing the material was preheated in the press with the mold plates slightly open for two minutes. Then the mold plates were pressed closed under a force of about 20 metric tons for two minutes. The samples were cooled in the molds under pressure for two minutes. Microtensile pads having a thickness of about 0.6 mm and test regions measuring 2.54 mm in width and 12.7 mm in length were cut from the test pads with a die. The samples were stored in closed dry bottles for one or more days prior to tensile testing.

Tensile strengths of the samples were measured with an Instron TM table model instrument, using a pulling speed of 51 mm per minute. ("Instron" is a Registered Trade Mark at least in the United Kingdom). Measurements were made at room temperature (25°C), and also at a higher temperature to determine the usefulness of the materials at elevated temperature. In the measurements at elevated temperature, after being placed in the testing oven, a 3 minute waiting period was allowed before pulling to enable the sample to equilibrate with the oven temperature. The elevated temperature utilized in most measurements was 70°C.

Melt flow rates for the various materials were determined at 190°C which is in the range of typical processing temperatures for lightly sulfonated EPDM. The melt index instrument specified in ASTM 1238-70 was used, with the standard capillary. The weight of the probe plus the added weight was 12.5 kilograms. Flow rates were measured electronically as probe displacement per minute, and these results were converted to grams per 10 minutes using a conversion factor.

The melt flow rates and tensile properties for the compounds with the different oils are shown in Table V. From Table IV we saw that the compound containing the more polar Sunpar 2280 oil had a compression set which was far greater than for the compounds containing the low polar content oils Shellflex 371 and ECA 6492. An important question is whether this substantial improvement in compression set behavior is associated with detrimental changes in melt flow rate or tensile properties. From Table V we see that there is negligible difference in melt flow rates. Therefore the improvement in compression set is at no cost to high temperature melt processibility of the compounds containing the lower polar content oils. Also, at both 25°C and at 70°C we see that the softnesses or stiffnesses as reflected in the initial modulii of the different materials are essentially identical (to within experimental error) for the compounds with the different oils. Only in the elongation of the samples is there a significant difference; and, of course, this difference in elongation is reflected in the maximum tensile strength of the samples. This decrease in elongation for the compounds containing the low polar content oils Shellflex 371 and ECA 6492 is roughly 25%, and results in a decrease in tensile strength of about 10 to 15 percent. Therefore, in applications where high extensions (of well over 200%) are required, compression set may have to be sacrificed for the greater elongation, and a higher polar content oil may be needed. However, in a large range of applications, and probably in the majority of

8

applications, high elongations are not required and compression set is more of a concern. For example, in almost all compressive-mode applications high elongations are not needed — such as for gaskets, and flexible padding. Another major application which does not require high elongations is in flexible tubing. This is an application which requires good compression set in order to maintain secure leak proof seals to the fitting at the end of the hoses. In summary, the utilization of low polar content oils in sulfonated EPDM compounds to obtain lower compression set should be advantageous in most applications as it causes no significant change in melt flow rate (processibility), or softness. Only in those particular uses where high elongation is a requirement might the use of the low polar content oils not be advisable.

## TABLE V

Melt flow and tensile properties of a sulfonated EPDM compound[1] containing process oils having different polar concentrations

Tensile properties[3]

| Process oil[5] employed | Melt flow rate[2] (g/10 min) | 25°C | | | | | 70°C | | | | |
|---|---|---|---|---|---|---|---|---|---|---|---|
| | | Strength (psi) | kPa×10⁻² | Elong. (%) | Initial modulus[4] (psi) | kPa×10⁻² | Strength (psi) | (kPa×10⁻²) | Elong. (%) | Initial modulus (psi) | (kPa×10⁻²) |
| Sunpar 2280 | 13.1 | 885 | 62.2 | 315 | 810 | 57.0 | 470 | 38.0 | 425 | 505 | 35.5 |
| Shellflex 371 | 14.3 | 800 | 56.2 | 245 | 820 | 57.7 | 404 | 28.4 | 320 | 510 | 35.9 |
| ECA 6492 | 14.6 | 775 | 54.5 | 250 | 800 | 56.2 | 380 | 26.7 | 270 | 530 | 37.3 |

[1]The compound is described in Example 2.
[2]ASTM 1238-70. Standard Capillary, 190°C 250 psi (17.6 kPa×10⁻²).
[3]Microdumbell, about 0.025 mm thick, 2.5 mm wide, 12.7 mm long straight test region. Pulled at 2 inches/minute (51.4 mm/min).
[4]Modulus determined from initial steepest slope of the stress-strain curve.
[5]Manufacturers and chemical properties are listed in Table III.

# 0 002 348

## Claims

1. A process for the manufacture of a sulphonated EPDM terpolymer blend having no filler, which comprises:

(a) dissolving an EPDM terpolymer in a solvent to form a cement;

(b) sulphonating with a sulphonating agent at a temperature between −10°C to 100°C said EPDM terpolymer in said cement to form a sulphonated EPDM terpolymer, said sulphonating agent being an acyl sulphate, a mixture of sulphuric acid and an acid anhydride, a sulphur trioxide donor complexed with a Lewis base containing oxygen, nitrogen or phosphous or a mixture of said acyl sulphate and complex;

(c) quenching with a quenching agent said cement of said sulphonated EPDM terpolymer to form a solution of said sulphonated EPDM terpolymer, said quenching agent being water, a liquid aliphatic alcohol, an aromatic hydroxyl compound or a cycloaliphatic alcohol;

(d) at least partly neutralizing said sulphonated EPDM terpolymer in said solution with a neutralizing agent to form a neutralized sulphonated EPDM terpolymer;

(e) adding under agitation a non-polar process oil having less than 2 wt. % polar compounds to said solution of said neutralized sulphonated EPDM terpolymer to form a blend of said process oil and said neutralized sulphonated EPDM terpolymer in said solution; and

(f) recovering said sulphonated EPDM blend from said solution.

2. A process according to claim 1, wherein said EPDM has 0.1 to 10 mole percent olefinic unsaturation.

3. A process according to either claims 1 and 2, wherein said elastomeric polymer has an $\overline{M}n$ of 10,000 to 200,000 and a Mooney viscosity at 100°C at 8 min of 5 to 90.

4. A process according to any one of the preceding claims, wherein said solvent is a halogenated aromatic hydrocarbon, an aromatic hydrocarbon, an aliphatic hydrocarbon or a mixture thereof.

5. A process according to any one of the preceding claims, wherein said sulfonated EPDM terpolymer contains 10 to 60 meq. sulfonate groups per 100 grams of said sulfonated elastomeric polymer.

6. A process according to any one of the preceding claims, wherein said process oil is aromatic, naphthenic, paraffinic or a mixture thereof.

7. A process according to any one of the preceding claims, wherein said neutralizing agent is ammonia, an amine, a suitable salt thereof or a metallic salt of a carboxylic acid, the metal ion of said metallic salt being that of aluminium, iron, lead, antimony, or a metal of Groups IA, IIA, Ib or IIB of the Periodic Table of Elements, or a mixture thereof.

8. A process according to any one of the preceding claims which includes adding a preferential plasticizer to said solution of said sulfonated EPDM terpolymer at a concentration level of less than 45 parts by weight per 100 parts by weight of said sulfonated EPDM terpolymer.

9. A process according to claim 8, wherein said preferential plasticizer is a carboxylic acid, the ammonium or metal salt of the carboxylic acid, an alcohol, an ester, an urea, a phosphate, an amine, an amide or a mixture thereof, wherein the metal ion of said metal salt is that of lead, iron, antimony, aluminium or a metal of Groups IA, IIA, IB or IIB of the Periodic Table of Elements.

10. A process according to claim 8, wherein said preferential plasticizer is a combination of stearic acid and a metal salt of said stearic acid, the metal ion of said metal salt being that of lead, iron, antimony, aluminium or a metal of Groups IA, IIA, IB and IIB of the Periodic Table of Elements.

## Revendications

1. Procédé pour la fabrication d'un mélange de terpolymère d'EPDM sulfoné, ne contenant pas de matière de charge, caractérisé en ce qu'il consiste:

(a) à dissoudre un terpolymère d'EPDM dans un solvant de manière à former un ciment;

(b) à sulfoner ledit terpolymère d'EPDM dans ledit ciment avec un agent de sulfonation à une température comprise entre −10 et 100°C, de manière à former un terpolymère d'EPDM sulfoné, ledit agent de sulfonation étant un sulfate d'acyle, un mélange d'acide sulfurique et d'un anhydride d'acide, un donneur de trioxyde de soufre complexé avec une base de Lewis contenant de l'oxygène, de l'azote ou du phosphore ou un mélange dudit sulfate d'acyle et du complexe;

(c) à diluer ledit ciment du terpolymère d'EPDM sulfoné avec un agent de dilution de manière à former une solution dudit terpolymère d'EPDM sulfoné, ledit agent de dilution étant l'eau, un alcool aliphatique liquide, un composé hydroxyle aromatique ou un alcool cycloaliphatique;

(d) à neutraliser au moins partiellement ledit terpolymère d'EPDM sulfoné dans ladite solution avec un agent de neutralisation, de manière à former un terpolymère d'EPDM sulfoné neutralisé;

(e) à ajouter en agitant une huile de traitement non polaire contenant moins de 2% en poids de composés polaires à ladite solution du terpolymère d'EPDM sulfoné neutralisé, de manière à former un mélange de ladite huile de traitement et dudit terpolymère d'EPDM sulfoné neutralisé dans ladite solution; et

(f) à récupérer ledit mélange d'EPDM sulfoné à partir deladite solution.

11

## 0 002 348

2. Procédé selon la fabrication 1, caractérisé en ce que ledit EPDM a une insaturation oléfinique de 0,1 à 10 moles %.

3. Procédé selon l'une des revendications 1 ou 2, caractérisé en ce que ledit polymère élastomère a une masse moléculaire moyenne en nombre (M̄n) comprise entre 10.000 et 200.000 et une viscosité Mooney à 100°C et 8 min de 5 à 90.

4. Procédé selon l'une quelconque des revendications 1 à 3, caractérisé en ce que ledit solvant est un hydrocarbure aromatique halogéné, un hydrocarbure aromatique, un hydrocarbure aliphatique ou un mélange de ces hydrocarbures.

5. Procédé selon l'une quelconque des revendications 1 à 4, caractérisé en ce que ledit terpolymère d'EPDM sulfoné contient de 10 à 60 meq de groupes sulfonates par 100 g dudit polymère élastomère sulfoné.

6. Procédé selon l'une quelconque des revendications 1 à 5, caractérisé en ce que ladite huile de traitement est une huile aromatique, naphténique, paraffinique ou un mélange de ces huiles.

7. Procédé selon l'une quelconque des revendications 1 à 6, caractérisé en ce que l'agent de neutralisation est l'ammoniac, une amine, un sel approprié de ces composés ou un sel métallique d'un acide carboxylique, l'ion métal dudit sel métallique étant un ion aluminium, fer, plomb, antimoine ou d'un métal des groupes IA, IIA, IB ou IIB du tableau périodique des Eléments ou un mélange de ces métaux.

8. Procédé selon l'une quelconque des revendications 1 à 7, caractérisé en ce qu'il comporte l'addition d'un plastifiant préférentiel à ladite solution dudit terpolymère d'EPDM sulfoné à une concentration inférieure à 45 parties en poids pour 100 parties en poids dudit terpolymère d'EPDM sulfoné.

9. Procédé selon la revendication 8, caractérisé en ce que ledit plastifiant préférentiel est un acide carboxylique, le sel d'ammonium ou d'un métal de l'acide carboxylique, un alcool, un ester, une urée, un phosphate, une amine, un amide ou un mélange de ces composés, où l'ion métal dudit sel métallique est un ion plomb, antimoine, aluminium ou d'un métal des groupes IA, IIA, IB ou IIB du tableau périodique des Eléments.

10. Procédé selon la revendication 8, caractérisé en ce que ledit plastifiant préférentiel est une combinaison d'acide stéarique et d'un sel métallique dudit acide stéarique, l'ion métal dudit sel métallique étant un ion plomb, fer, antimoine, aluminium ou d'un métal des groupes IA, IIA, IB et IIB du tableau périodique des Eléments.

## Patentansprüche

1. Verfahren zur Herstellung eines sulfonierten EPDM-Terpolymerverschnitts ohne Füllstoff, dadurch gekennzeichnet, daß

(a) ein EPDM-Terpolymer zur Bildung eines Zements in einem Lösungsmittel aufgelöst wird;

(b) das EPDM-Terpolymer in dem Zement mit einem Sulfonierungsmittel bei einer Temperatur zwischen −10°C und 100°C unter Bildung eines Sulfonierten EPDM-Terpolymers sulfoniert wird, wobei das Sulfonierungsmittel ein Acylsulfat, eine Mischung von Schwefelsäure und einem Säureanhydrid, ein Schwefeltrioxiddonor komplexiert mit einer Sauerstoff, Stickstoff oder Phosphor enthaltenden Lewis-Base oder eine Mischung des Acylsulfats und des Komplexes ist;

(c) das sulfonierte EPDM-Terpolymer unter Bildung einer Lösung des sulfonierten EPDM-Terpolymers mit einem Abschreckmittel abgeschreckt wird, wobei das Abschreckmittel Wasser, ein flüssiger aliphatischer Alkohol, eine aromatische Hydroxylverbindung oder ein cycloaliphatischer Alkohol ist;

(d) das sulfonierte EPDM-Terpolymer in dieser Lösung zumindest teilweise mit einem Nuetralisierungsmittel zur Bildung eines neutralisierten sulfonierten EPDM-Terpolymers neutralisiert wird;

(e) unter Rühren ein nicht polares Prozeßöl mit weniger als 2 Gew.% polaren Verbindungen zu der Lösung des neutralisierten sulfonierten EPDM-Terpolymers zur Bildung eines Verschnitts aus dem Prozeßöl und dem neutralisierten sulfonierten EPDM-Terpolymer in der Lösung gegeben wird; und

(f) der sulfonierte EPDM-Verschnitt aus der Lösung gewonnen wird.

2. Verfahren nach Anspruch 1, dadurch gekennzeichnet, daß das EPDM eine olefinische Ungesättigtheit von 0,1 bis 10 Mol % besitzt.

3. Verfahren nach jedem der Ansprüche 1 und 2, dadurch gekennzeichnet, daß das elastische Polymer ein M̄n von 10.000 bis 200.000 und eine Mooney-Viskosität bei 100°C und 8 Minuten von 5 bis 90 besitzt.

4. Verfahren nach jedem der vorangegangenen Ansprüche, dadurch gekennzeichnet, daß das Lösungsmittel ein halogenierter aromatischer Kohlenwasserstoff, ein aromatischer Kohlenwasserstoff, ein aliphatischer Kohlenwasserstoff oder eine Mischung derselben ist.

5. Verfahren nach jedem der vorangegangenen Ansprüche, dadurch gekennzeichnet, daß das sulfonierte EPDM-Terpolymer 10 bis 60 Milliäquivalente Sulfonatgruppen je 100 g des sulfonierten elastomeren Polymers enthält.

**0 002 348**

6. Verfahren nach jedem der vorangegangenen Ansprüche, dadurch gekennzeichnet, daß das Prozeßöl aromatisch, naphthenisch, paraffinisch oder eine Mischung derselben ist.

7. Verfahren nach jedem der vorangegangenen Ansprüche, dadurch gekennzeichnet, daß das Neutralisierungsmittel Ammoniak, ein Amin, ein geeignetes Salz derselben oder ein Metallsalz einer Carbonsäure, wobei das Metallion des Metallsalzes Aluminium Eisen, Blei, Antimon oder ein Metall der Gruppen IA, IIA, Ib oder IIB des periodischen Systems der Elemente ist, oder eine Mischung derselben ist.

8. Verfahren nach jedem der vorangegangenen Ansprüche, dadurch gekennzeichnet, daß ein bevorzugter Weichmacher zu der Lösung des sulfonierten EPDM-Terpolymers in einer Konzentration von weniger als 45 Gewichtsteilen je 100 Gewichtsteile des sulfonierten EPDM-Terpolymers gegeben wird.

9. Verfahren nach Anspruch 8, dadurch gekennzeichnet, daß der bevorzugte Weichmacher eine Carbonsäure, das Ammonium-oder Metallsalz der Carbonsäure, ein Alkohol, ein Ester, ein Harnstoff, ein Phosphat, ein Amin, ein Amid oder eine Mischung derselben ist, wobei des Metallion des Metallsalzes Blei, Eisen, Antimon, Aluminium oder ein Metall der Gruppen IA, IIA, IB oder IIB des periodischen Systems der Elemente ist.

10. Verfahren nach Anspruch 8, dadurch gekennzeichnet, daß der bevorzugte Weichmacher eine Kombination von Stearinsäure und einem Metallsalz der Stearinsäure ist, wobei das Metallion des Metallsalzes Blei, Eisen, Antimon, Aluminium oder ein Metall der Gruppen IA, IIA, IB und IIB des periodischen Systems der Elemente ist.